# EUROPÄISCHE PATENTSCHRIFT

(11) **EP 0 543 781 B1**
(45) Veröffentlichungstag und Bekanntmachung des Hinweises auf die Patenterteilung: **10.01.1996**
(21) Anmeldenummer: 92810890.1
(22) Anmeldetag: 17.11.1992
(51) Int. Cl.: B26B 5/00, B26B 11/00

(54) **Messer**
Knife
Couteau

(30) Priorität: 21.11.1991 CH 3417/91
(43) Veröffentlichungstag der Anmeldung: 26.05.1993
(73) Patentinhaber: Szabo, Stephan, CH-8606 Greifensee (CH)
(72) Erfinder: Szabo, Stephan, CH-8606 Greifensee (CH)
(74) Vertreter: von Foerster, Eckard

(56) Entgegenhaltungen:
- DE-U- 8 801 417
- GB-A- 1 371 585
- US-A- 1 359 448
- US-A- 2 597 258
- US-A- 3 765 089
- US-A- 4 890 387
- US-A- 4 974 320

## Beschreibung

Die Erfindung betrifft ein Messer mit einer am vorderen Ende eines Messergriffs in einer Führung ein- und ausschiebbar gehaltenen und festklemmbaren Klinge.

Bekannte Messer dieser Art werden von Handwerkern für die verschiedensten Arbeiten gebraucht, bei denen eine sehr scharfe Schneide an der Klinge unerlässlich ist, welche aber aufgrund der Beanspruchung und der Materialbeschaffenheit des zu schneidenden Materials relativ schnell stumpf wird, so dass man die Klinge gegen eine neue auswechseln muss. Messer dieser Art werden beispielsweise zum Zuschneiden von Auslegeteppichen beim Verlegen derselben verwendet und erlauben jede beliebige Schnittlinienführung entlang auch ungerader begrenzter Auslegeflächen mit höchster Genauigkeit, was mit einer Schere technisch nicht durchführbar ist. Bei Nichtgebrauch muss bei einem solchen Messer die Klinge in den Messergriff zurückgezogen festgehalten sein, um die Verletzungsgefahr auszuschliessen.

Zum Ein- und Ausfahren der Klinge in bzw. aus dem Messergriff ist bei verschiedenen Typen bekannter Messer im Messergriff ein Klingenschieber vorhanden, der mit einem vom Rand vorstehenden Teil in eine spezielle Randaussparung der Klinge eingreift, sodass die formschlüssig am Klingenschieber gehaltene Klinge mit Hilfe des in verschiedenen Raststellungen am Messergriff einrastbaren Klingenschiebers in der jeweils gewünschten Gebrauchsstellung mehr oder weniger weit ausgefahren festgehalten ist.

Es gibt z. B. in Europa, in Amerika und in Japan verschiedene Klingenstandards für derartige Messer, wobei der Unterschied in der Form und Wirkungsweise der zwischen Klinge und Messergriff herzustellenden und leicht lösbar ausgestalteten Verbindung besteht. Statt der bereits erwähnten, in Europa gebräuchlichen Randaussparung an der Klinge weisen beispielsweise die in Amerika verwendeten Klingen in der Mitte einen Längsschlitz auf, durch den sich der Schraubenschaft einer gegen die Klinge angedrückten Klemmschraube hindurcherstreckt und der zur Führung der im Ausmass des Längsschlitzes ein-und ausfahrbaren Klinge dient.

Das sichere Arretieren der Klinge in der bezüglich des Messergriffs mehr oder weniger weit ausgefahrenen,gewünschten Gebrauchsstellung ist bei den bekannten Messern auf sehr unterschiedliche Art und mit teilweise sehr abwendigen Mitteln gelöst. Der Messergriff und die in diesem zu verwendende Klinge sind konstruktiv immer aufeinander abgestimmt, sodass es nicht möglich ist, dem europäischen Klingenstandard entsprechende Klingen in einem Messergriff zu verwenden, der für Klingen nach dem amerikanischen Klingenstandard ausgebildet ist.

Aus US-A-2 597 258 ist ein Messer bekannt, das eine am vorderen Ende eines Messergriffs in einer Führung ein- und ausschiebbar gehaltene und mittels einer Klemmschraube festklemmbare Klinge aufweist, die von der gegen ihre eine Flachseite anpressbaren Stirnfläche der im Endbereich des Messergriffs schraubbar angeordneten Klemmschraube mit ihrer anderen Flachseite gegen eine Klingen-Auflagefläche im Messergriff andrückbar ist.

Bei diesem aus der US-A-2 597 258 bekannten Messer besteht der Messergriff vollumfanglich aus Kunststoffmaterial, das zur Aufnahme und Führung einer scharfen Klinge in einem durchgehenden Schlitz im Kunststoffgriff wenig geeignet ist, weshalb eine die Klinge C-förmig umgreifende, metallische Halterung mit einem Gewindeansatz für die Klemmschraube in dem Kunststoffgriff eingegossen ist. Der relativ kleinen Klemmschraube direkt gegenüber, an der Stelle der grössten Druckausübung, fehlt eine durchgehende Klingen-Auflagefläche.

Der vorliegenden Erfindung lag die Aufgabe zugrunde, ein für die Verwendung von Klingen der verschiedenen Klingenstandards universell geeignetes Messer zu schaffen, in dessen Messergriff vorhandene Klingen z.B. nach dem europäischen, dem amerikanischen oder japanischen Klingenstandard mit einfachen Mitteln sicher arretiert werden können. Die Aufgabe bestand ferner auch darin, mit einer einfachen zweckmässigen Konstruktion ein preisgünstiges Messer zu schaffen, das aufgrund der Verwendbarkeit für alle Klingenstandards eine Herstellung in viel grösserer Stückzahl und entsprechend kostengünstiger möglich macht.

Die Aufgabe der Erfindung erstreckte sich ferner auch darauf, ein Messer zu schaffen, das als Handwerkszeug bezüglich seiner Handhabung etwas an die individuellen Wünsche des Benutzers angepasst werden kann und das ausser als Handwerkszeug auch in Verbindung mit einer maschinellen Vorrichtung benutzt werden kann.

Zur Lösung der Aufgabe weist das Messer die Merkmale nach Anspruch 1 auf. In bevorzugter Weise ist ein mit Hartmetallsplittern besetzter Draht als Trägerkörper in der Klingen-Auflagefläche im Messergriffendbereich angeordnet. Der Vorteil des Messer besteht darin, dass die Klinge im vordersten Bereich des Messergriffs festgeklemmt und dabei gegen Hartmetall gepresst ist, wodurch die Klinge auch ohne formschlüssige Halterung absolut festgehalten ist. Dadurch ist es möglich, das Messer mit jeder Klinge der zuvor erwähnten bekannten Klingenstandards zu verwenden, die in Europa, Amerika oder Japan gebräuchlich sind, wobei die unterschiedliche besondere Formgebung dieser Klingen hier keine Rolle spielt.

In bevorzugter Weise sind an dem als Fachwerk ausgebildeten Rahmenkörper mit die Messergriffschmalseiten bildenden Rahmenlängsholmen und diese miteinander verbindenden Querstreben auf beiden Seiten die Kontur des Rahmens ausfüllende Griffschalen befestigt, die entweder schwach gewölbt oder sehr bauchig ausgebildet sein können, sodass mit unterschiedlich gestalteten Messergriffen individuelle Wünsche der Benutzer bezüglich der Messerhandhabung erfüllt werden können. Dar flache fachwerkartige Rahmenkörper ohne die seitlichen Griffschalen ermöglicht es ausserdem, das Messer mit Hilfe der jeweils mit einem Loch versehenen Querstreben beispielsweise an einem Schlitten einer Vorrichtung zu befesigen, mit der sich genaue geradlinige Schnitte herstellen lassen.

In weiterer vorteilhafter Ausgestaltung ist das rückwärtige Messergriffende derart ausgestaltet, dass an dem Rahmenkörper noch verschiedene andere Werkzeuge befestigt werden können wie beispielsweise ein Sägeblatt oder ein mit einer speziellen Halterung zu befestigender Kreisschneider oder Glasschneider, zu welchem Zweck der Rahmenkörper eine durch eine Aussparung im Rahmen gebildete Anflanschfläche mit einer Gewindebohrung aufweist.

Weitere Einzelheiten und Vorteile der Erfindung ergeben sich aus der nachfolgenden Beschreibung und den Zeichnungen, in denen eine Ausführungsform des Messers rein beispielsweise dargestellt ist. Es zeigen:
Fig. 1 eine Seitenansicht des Messer-Rahmenkörpers von der die Klemmschraube aufweisenden Vorderseite;
Fig. 2 eine Seitenansicht des Messer-Rahmenkörpers von der Rückseite;
Fig. 3 eine Seitenansicht des Messers mit durch Griffschalen ergänztem Rahmenkörper und Klinge;
Fig. 4 einen Teillängsschnitt durch das Messer längs der Linie 4-4 in Fig. 3;
Fig. 5 eine schaubildliche Darstellung des Messer-Rahmenkörpers von der Vorderseite;
Fig. 6 bis Fig.8 das Messer in Seitenansicht mit verschiedenen am Messergriff befestigbaren Werkzeugen.

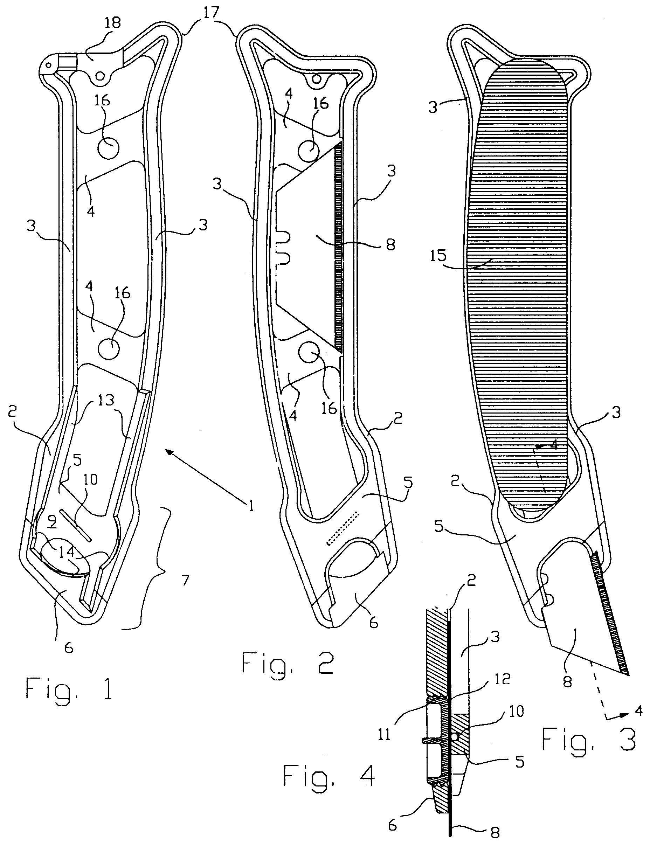

Das Messer besteht aus einem zum Festklemmen einer auswechselbaren Klinge dienenden Messergriff 1 und dieser Messergriff weist einen in Fig. 1 und Fig. 2 von verschiedenen Seiten dargestellten Rahmenkörper 2 auf, der als Fachwerk ausgebildet ist und aus die Messergriffschmalseiten bildenden Rahmenlängsholmen und diese miteinander verbindenden Querstreben 4, 5 und 6 besteht. Die beiden etwa in der Mitte und im rückwärtigen Endbereich befindlichen Querstreben 4 geben dem Rahmenkörper 2 die notwendige Stabilität. Dieser ist vorzugsweise ein einstückiges Gussteil aus Metall oder Kunststoffmaterial und entsprechend kostengünstig herstellbar. Im vorderen Messergriffendbereich 7 sind die beiden Längsholmen 3 durch zwei weitere Querstreben 5 und 6 miteinander verbunden, wobei diese beiden Querstreben in Längsrichtung des Messergriffs zueinander versetzt und auf gegenüberliegenden Seiten der Mittelsymmetrieebene des Messergriffs angeordnet sind, wie aus Fig. 4 und Fig. 5 am deutlichsten hervorgeht, wobei sich die im Längsschnitt gemäss Fig. 4 dargestellte Klinge 8 in dieser Mittelsymmetrieebene befindet. Die beiden Querstreben 5 und 6, die wegen der Herstellung des Rahmenkörpers 2 als einstückiges Gussteil aus giesstechnischen Gründen seitlich zueinander versetzt sind, haben die Funktion, die Klinge 8 mit dem vom Rahmenprofil 2 gebildeten Messergriff fest zu verbinden. Die von der das Rahmenende bildenden Querstrebe 6 einwärtsliegende Querstrebe 5 bildet die Klingenauflagefläche 9. In dieser Querstrebe 5 ist ein mit Hartmetall besetzter Trägerkörper 10, der vorzugsweise ein mit Hartmetallsplittern besetzter Draht ist, so eingelassen, dass er etwas über die Klingen-Auflagefläche 9 vorsteht. Gegen diesen mit Hartmetallsplittern besetzten Trägerkörper 10 wird die Klinge 8 mittels einer auf der anderen Seite der Klinge 8 angeordneten Klemmschraube 11 angepresst. Der Durchmesser der sehr flachen Klemmschraube 11 ist grösser als die Breite der Klinge 8, so dass die Klemmschraube mit ihrer flachen ebenen Stirnseite 12 einen Anpressdruck über die ganze Klingenbreite ausübt, so dass die auf der anderen Seite gegen den mit Hartmetallsplittern besetzten Draht 10 angedrückte Klinge 8 sicher festgehalten ist.

Aus Fig. 1 und Fig. 4 geht hervor, dass die Klinge 8 zwischen den beiden Querstreben 5 und 6 festgehalten ist, die damit auch zur Führung der Klinge dienen, während die Klinge 8 mit ihren einander gegenüberliegenden Schmalkanten an den beiden Längsholmen 3 des Rahmenkörpers 2 geführt ist, welche Längsholme zu diesem Zweck in dem zur Aufnahme der Klinge bestimmten Bereich innenseitig mit einem Rezess derart ausgebildet sind, dass Auflageränder 13 für die Klinge 8 vorhanden sind. Diese Auflageränder 13 erstrecken sich auch von der Querstrebe 5 zum vorderen Messergriffende hin, wie aus Fig. 1 zu erkennen ist, weshalb an dieser Stelle die das vordere Ende bildende Querstrebe 6 aus herstellungstechnischen Gründen ausgespart ist.

Für die flache Klemmschraube 11, deren Durchmesser grösser ist als die Breite der Klinge 8, ist am einwärts gerichteten Rand der Querstrebe 6 und an den eine kreisbogenförmige Aussparung aufweisenden Innenrändern der beiden Längsholme 3 des Rahmenkörpers 2 ein Gewinde 14 ausgebildet. Wie aus Fig. 1 hervorgeht, sind an der Querstrebe 6 und an den beiden Längsholmen 3 jeweils nur Umfangsteilbereiche des Gewindes 14 vorhanden, welches sich insgesamt über etwas mehr als einen Halbkreis erstreckt, was jedoch zum Festziehen der Klemmschraube 11 ausreicht. Bei Nichtgebrauch kann die Klinge 8 in den Messergriff hineingeschoben und mittels der Klemmschraube gesichert werden.

Der Rahmenkörper 2 ist insgesamt leicht gekrümmt und am hinteren Ende verbreitert so ausgebildet, dass er gut in der Hand liegt und als Messergriff benutzt werden kann. Der Rahmenkörper 2 lässt sich jedoch an jeder der beiden offenen Längsseiten mit einer Griffschale 15 verkleiden, die jeweils mittels einer nicht dargestellten Schnappverbindung am Rahmenkörper 2 befestigbar ist. Dadurch liegt das Messer besser in der Hand, um auch mehr Kraft auszuüben. Verschiedenartig geformte Griffschalen 15 stehen zur Auswahl und können gegeneinander ausgetauscht werden, so dass je nach den individuellen Wünschen des Benutzers eine flach gewölbte oder eine mehr bauchige Griffschale verwendet werden kann. Das Baukastenprinzip mit der Möglichkeit, die Endform des Messergriffs durch die Auswahl bestimmter Griffschalen zu bestimmen, bringt auch noch den weiteren Vorteil, dass das Messer auch nur mit dem flachen und parallele Aussenseiten aufweisenden Rahmenkörper 2 allein durch Befestigung des Rahmenkörpers beispielsweise an einem Schlitten einer Schneidvorrichtung verwendet werden kann, um durch Bewegen längs einer Führung dieser Vorrichtung absolut gerade Schnitte auszuführen, die bei Einstellbarkeit der Führung im Winkel zu einer Unterlage auch als Schrägschnitte durch ein zu schneidendes Material ausgeführt werden können. Zum Befestigen des Rahmenkörpers 2 in einer solchen Vorrichtung besitzen die beiden Querstreben 4 je eine Bohrung 16 für Befestigungsschrauben.

Wenn die beiden Griffschalen 15 an dem Rahmenkörper 2 befestigt sind, befindet sich zwischen diesen im Bereich der Querstreben 4 ein Hohlraum, um darin einen Vorrat an Klinger. unterzubringen, so dass bei Bedarf eine neue Klinge immer zur Verfügung steht.

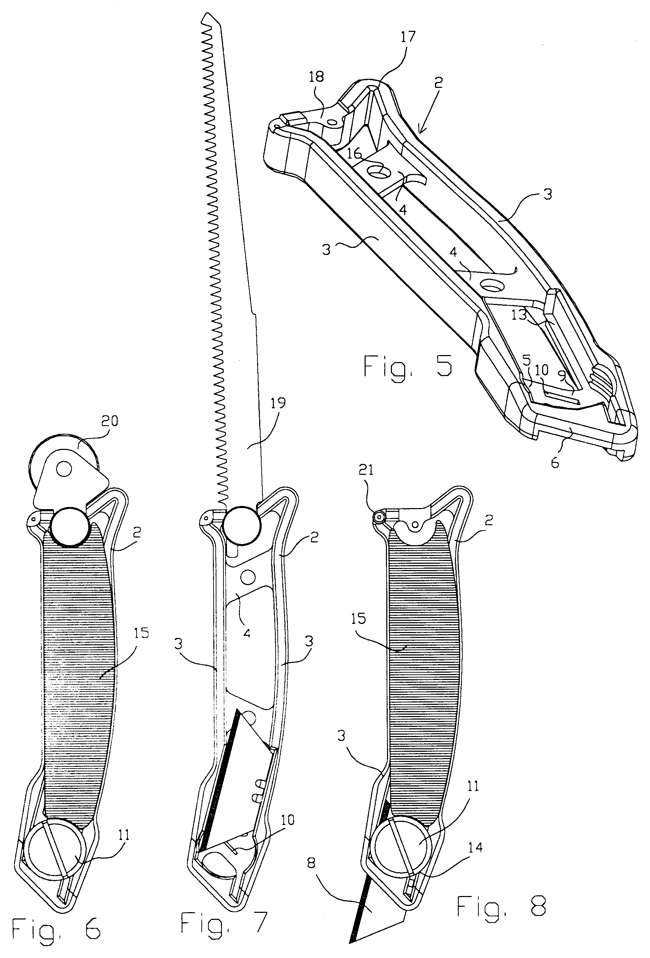

Das unter dem Gesichtspunkt einer kostengünstigen Herstellung und vielseitigen Verwendbarkeit entwickelte Messer dient ausser zum Schneiden mit der Klinge auch noch als Griff für am rückwärtigen Ende 17 des Messergriffs auswechselbar zu befestigende weitere Werkzeuge. Zu diesem Zweck besitzt der Rahmenkörper 2 an dem das rückwärtige Ende 17 bildenden Rahmenteil eine durch eine Aussparung gebildete Anflanschfläche 18 mit einer Gewindebohrung, um gemäss Fig. 6 bis Fig.8 an dieser Stelle ein entsprechend ausgebildetes Befestigungsende eines Sägeblatts 19 oder die einen Kreisschneider 20 tragende Halterung auswechselbar zu befestigen. An der unteren Ecke des verbreiterten rückwärtigen Endes 17 des Rahmenkörpers 2 ist ferner ein Glasschneider 21 angeordnet. Es können natürlich auch andere entsprechend ausgebildete Werkzeuge an dem beschriebenen Messergriff befestigt werden.

Ein westentlicher Vorteil des Messers besteht darin, dass mit dem Prinzip der Arretierung der Klinge mittels der die Klinge gegen einen mit Hartmetallsplittern besetzten Trägerkörper anpressenden Klemmschraube jede auf dem Markt befindliche Klinge verwendet werden kann, gleichgültig nach welchem Standard sie ausgebildet ist.

## Patentansprüche

1. Messer mit einer am vorderen Ende eines Messergriffs (2) in einer Führung ein- und ausschiebbar gehaltenen und mittels einer Klemmschraube (11) festklemmbaren Klinge (8), die von der gegen ihre eine Flachseite anpressbaren Stirnfläche der im Endbereich (7) des Messergriffs schraubbar angeordneten Klemmschraube (11) mit ihrer anderen Flachseite gegen eine Klingen-Auflagefläche (9) im Messergriff andrückbar ist, dadurch gekennzeichnet, dass der Messergriff (2) einen einteilig und fachwerkartig ausgebildeten Rahmenkörper (2) mit die Schmalseiten des Messergriffs bildenden Längsholmen (3) und diese miteinander verbindenden Querstreben (4,5,6) aufweist und dass in einer als Klingen-Auflagefläche dienenden Querstrebe (5) im vorderen Endbereich des Rahmenkörpers (2) ein aus der Fläche der Querstrebe etwas vorstehender, mit Hartmetall besetzten Trägerkörper (10) angeordnet ist, gegen welches Hartmetall die Klinge (8) mittels der in einem im vorderen Endbereich des Rahmenkörpers ausgebildeten Gewinde (14) schraubbar angeordneten Klemmschraube (11) andrückbar ist.

2. Messer nach Anspruch 1, dadurch gekennzeichnet, dass der Trägerkörper ein mit Hartmetallsplittern besetzter Draht (10) ist, der der flachen Klemmschrauben.-Stirnseite gegenüber in der Querstrebe (5) angeordnet ist.

3. Messer nach Anspruch 1, dadurch gekennzeichnet, dass die genannten Querstreben (4,5,6) in Längsrichtung des Messergriffs zueinander versetzt die Längsholme (3) des Rahmenkörpers (2) miteinander verbinden und die Querstreben zusammen mit den Längsholmen die Führung für die Klinge (8) bilden und dass das Gewinde (14) für die Klemmschraube (11), deren Durchmesser grösser als die Klingenbreite ist, am innenseitigen Rand der im vorderen Enbereich des Rahmenkörpers (2) vorhandenen Querstrebe (6) und an den beiden benachbarten Längsholmen (3) ausgebildet ist.

4. Messer nach Anspruch 1, dadurch gekennzeichnet, dass der als Fachwerk ausgebildete Rahmenkörper (2) ein einstückiges Gussteil aus Leicht metall oder Kunststoffmaterial bildet.

5. Messer nach Anspruch 1, dadurch gekennzeichnet, dass in dem beidseits mit einer lösbaren Griffschale (15) als Seitenverkleidung versehenen fachwerkartige Rahmenkörper (2) ein Klingenvorrat angeordnet ist.

## Claims

1. A knife having a knife handle (2) with a front end section, a blade guiding means located at said front end section (7) and a clamping screw (11) in the front end section adapted to be pressed with its front surface against the first planar surface of the blade, of which the second planar surface is pressed against a blade-resting surface in the front end section (7), characterized in that said knife handle consists of one piece being a frame body (2) in form of a lattice work having longitudinal frame spars (3) forming narrow sides of the knife handle and cross struts (4,5,6) interconnecting said longitudinal frame spars, one of said cross struts (5) forming the blade resting surface being provided with a supporting body (10) covered by a hard metal to project somewhat from the blade resting surface, said blade being adapted to be pressed against said supporting body covered by hard metal by means of said clamping screw which is held in a thread (14) formed in the frame body-front end section.

2. A knife of claim 1, characterized in that the supporting body is a wire (10) covered with hard metal chips located in the cross strut (5) of the frame body opposite the planar front surface of the clamping screw.

3. A knife of claim 1, characterized in that said cross struts (4,5,6) of the handle interconnecting said longitudinal frame spars (3) are staggered in the longitudinal direction of the knife handle and said cross struts and longitudinal frame spars forming blade guiding means for the blade (8) and that said thread (14) for the clamping screw (11) of which the diameter exeeds the width of the blade, is formed on the inside edge of the cross strut (6),located on the frame body-front end, and on said two longitudinal spars (3).

4. A knife of claim 1, characterized in that the lattice shaped frame body (2) forms an intergral moulded part of a light metal or a plastic material.

5. A knife of claim 1, characterized in that a supply of knife blades is located inside of the lattice shaped frame body (2), which is completed with handle shells (15) acting as a side covering and being detachably mounted to both sides of the lattice shaped frame body.

## Revendications

1. Couteau à lame rétractable (8), tenue à l'extrémité avant d'une poignée (2) dans un guide et propre à être bloquée au moyen d'une vis de serrage (11), cette lame pouvant être serrée par sa face frontale et être pressée contre l'une des faces plates de la vis de serrage (11), vissée dans la zone d'extrémité (7) de la poignée du couteau, avec son autre face plate contre une surface d'appui de la lame (9) dans la poignée, caractérisé en ce que la poignée (2) présente un corps de base, constitué d'une seule pièce, en treillis, avec des éléments longitudinaux (3) formant les côtés étroits de la poignée et des éléments transversaux (4, 5, 6), reliant les premiers et en ce que, dans un élément transversal (5) faisant office de surface d'appui de la lame et dans la zone d'extrémité avant du corps de base (2), est disposé un support (10), débordant légèrement de la surface de l'élément transversal et revêtu de métal dur, contre lequel la lame (8) peut être serrée au moyen de la vis de serrage (11) disposée dans un filetage (14) réalisé dans la zone d'extrémité avant du support.

2. Couteau selon la revendication 1, caractérisé en ce que le support est un fil (10), recouvert d'éclats de métal dur, disposé en face de la face frontale plate de la vis de serrage dans l'élément transversal (5).

3. Couteau selon la revendication 1, caractérisé en ce que les éléments transversaux (4, 5, 6), décalés les uns par rapport aux autres dans le sens de la longueur de la poignée, relient entre eux les éléments longitudinaux (3) du corps de base (2) et les éléments transversaux et forment, conjointement avec les éléments longitudinaux, un guide pour la lame (8), et en ce que le filetage (14) pour la vis de serrage (11), dont le diamètre est supérieur à la largeur de la lame, est formé sur le bord interne de l'élément transversal (6), présent dans la section d'extrémité avant du corps de base (2) et sur les deux éléments longitudinaux (3) voisins.

4. Couteau selon la revendication 1, caractérisé en ce que le corps de base (2) réalisé en treillis, forme une pièce moulée d'un seul tenant, en métal léger ou en plastique.

5. Couteau selon la revendication 1, caractérisé en ce qu'une réserve de lames est disposée dans le corps de base (2) en treillis, muni des deux côtés d'une enveloppe de poignée (15), amovible, formant revêtement latéral.
